(19) Europäisches Patentamt
European Patent Office
Office européen des brevets

(11) EP 1 505 611 B1

(12) **EUROPÄISCHE PATENTSCHRIFT**

(45) Veröffentlichungstag und Bekanntmachung des Hinweises auf die Patenterteilung:
**16.11.2011 Patentblatt 2011/46**

(51) Int Cl.:
*H01G 9/052* *(2006.01)*

(21) Anmeldenummer: **04016319.8**

(22) Anmeldetag: **12.07.2004**

(54) **Verfahren zur Herstellung von Kondensatoren**

Method of making capacitors

Procédé de fabrication de condensateurs

(84) Benannte Vertragsstaaten:
**CZ DE GB PT**

(30) Priorität: **22.07.2003 DE 10333155**

(43) Veröffentlichungstag der Anmeldung:
**09.02.2005 Patentblatt 2005/06**

(73) Patentinhaber: **H.C. Starck GmbH**
**38642 Goslar (DE)**

(72) Erfinder: **Schnitter, Christoph, Dr.**
**31188 Holle-Sottrum (DE)**

(56) Entgegenhaltungen:
**EP-A- 1 388 870     US-A1- 2002 114 722**

EP 1 505 611 B1

## Beschreibung

Die Erfindung betrifft ein Verfahren zur Herstellung von Kondensatoren auf Basis Niobsuboxid mit einer Isolatorschicht aus Niobpentoxid, eine für die Herstellung von Kondensatoren geeignete Pulvermischung, aus der Pulvermischung hergestellte Pressköper sowie Kondensatoren mit speziellen Eigenschaften.

Unter Niobsuboxid werden im Sinne dieser Erfmdung Verbindungen der Formel $NbO_z$ verstanden, wobei z < 2,2 und vorzugsweise 0,5 < z < 2,2 gilt.

Als Festelektrolytkondensatoren mit sehr großer aktiver Kondensatorfläche und daher kleiner, für die mobile Kommunikationselektronik geeigneter Bauweise werden überwiegende solche mit einer auf einem entsprechenden leitfähigen Träger aufgebrachten Niob- bzw. Tantalpentoxidsperrschicht eingesetzt unter Nutzung von deren Stabilität ("Ventilmetall"), der vergleichsweise hohen Dielektrizitätskonstanten und der über die elektrochemische Erzeugung mit sehr gleichmäßiger Schichtdicke herstellbare isolierende Pentoxidschicht. Als Träger werden metallische oder leitfähige niedere oxidische (Suboxide) Vorläufer der entsprechenden Pentoxide eingesetzt. Der Träger, der zugleich die eine Kondensatorelektrode (Anode) darstellt, besteht aus einer hochporösen, schwammartigen Struktur, die durch Versintern feinstteiliger Primärstrukturen bzw. bereits schwammartiger Sekundärstrukturen hergestellt wird. Die Oberfläche der Trägerstruktur wird elektrolytisch zum Pentoxid oxidiert ("formiert"), wobei die Dicke der Pentoxidschicht durch die Maximalspannung der elektrolytischen Oxidation ("Formierspannung") bestimmt wird. Die Gegenelektrode wird durch Tränken der schwammartigen Struktur mit Mangannitrat, das thermisch zu Mangandioxid umgesetzt wird oder mit einem flüssigen Vorläufer eines Polymerelektrolyten und Polymerisation erzeugt. Die elektrischen Kontakte zu den Elektroden werden auf der einen Seite durch einen bei der Erzeugung der Trägerstruktur eingesinterten Tantal- oder Niobdraht und die gegen den Draht isolierte metallische Kondensatorhülle dargestellt.

Die Kapazität C eines Kondensators berechnet sich nach folgender Formel:

$$C = (F \cdot \varepsilon) / (d \cdot V_F)$$

wobei F die Kondensatoroberfläche, $\varepsilon$ die Dielektrizitätskonstante, d die Dicke der Isolatorschicht pro V Formierspannung und $V_F$ die Formierspannung bezeichnet. Da die Dielektrizitätskonstante $\varepsilon$ für Tantalpentoxid bzw. Niobpentoxid 27,6 bzw: 41 beträgt, das Dickenwachstum der Schicht pro Volt Formierspannung d aber 16,6 bzw. 25 Å/V beträgt, weisen beide Pentoxide nahezu denselben Quotienten $\varepsilon/d$ =1,64 bzw. 1,69 auf. Kondensatoren auf Basis beider Pentoxide mit gleicher Geometrie der Anodenstrukturen weisen also dieselbe Kapazität auf. Unterschiede bei Angaben von auf das Gewicht bezogenen spezifischen Kapazitäten ergeben sich trivialerweise aus den unterschiedlichen Dichten von Nb, $NbO_x$ und Ta. Anodenstrukturen aus Nb und $NbO_x$ weisen daher den Vorteil der Gewichtsersparnis bei Anwendung beispielsweise in Mobiltelefonen, bei denen um jedes Gramm Gewichtsersparnis gerungen wird, auf. Unter Kostengesichtspunkten ist $NbO_x$ (Niobsuboxid) günstiger als Nb, da ein Teil des Volumens der Anodenstruktur durch Sauerstoff bereitgestellt wird.

Ein Nachteil von Niobsuboxid als Trägerkörper für Kondensatorsperrschichten ist, dass eine ausreichende Pressfestigkeit des Anodensinterkörpers und eine ausreichende Drahtzugfestigkeit nur durch Sinterung der Presskörper bei einer vergleichsweise hohen Sintertemperatur (im Bereich von 1450°C im Vergleich zu 1150°C bei Nb-Metall) erreicht werden. Die hohe Sintertemperatur führt einerseits über erhöhte Oberflächendiffusion zu einer Verkleinerung der Oberfläche des Presskörpers beim Übergang zum Sinterkörper und damit zu geringerer Kapazität und bedingt andererseits einen erhöhten Energieaufwand und eine erhöhte Materialbeanspruchung der Tiegel und Sinteröfen.

Der Grund ist, dass Niobsuboxid im Vergleich zu Niobmetall mit einer metallischen Duktilität bereits erhebliche kovalente Bindungsanteile aufweist, die eine vergleichsweise keramische Sprödigkeit bedingen.

Ferner lässt die Pressfestigkeit der Anodenkörper vor der Sinterung zu wünschen übrig, da die porösen Pulveragglomerate beim Pressen nicht stabil "verzahnen", sondern in stärkerem Maße zum Zerbrechen bzw. zum Abrieb neigen, so dass nicht nur die Ausbildung stabiler Sinterbrücken behindert ist, sondern auch feinteiligere Agglomerate bis hin zu isolierten Primärteilchen entstehen, die eine nachteilige Veränderung der Porenstruktur des gesinterten Anodenkörpers bedingen. Darüber hinaus kommt es im Vergleich zu Metallpulvern zu einem erhöhten Verschleiß der Presswerkzeuge. Nicht zuletzt weisen Nioboxidpulver auch ein im Vergleich zu Metallpulvern schlechteres Fließvermögen auf, wodurch die Dosierung der Pulver in die Presswerkzeuge erschwert wird.

US 20020114722 beschreibt die Anodenherstellung aus Niobsuboxiden, wobei die Niobsuboxide ohne jegliche Zusatzkomponenten gepresst und anschließend bei Temperaturen von 1200 bis 1600 °C gesintert werden.

Gemäß WO 01/71738 A2 wird daher versucht, diese Nachteile dadurch abzuschwächen, dass einerseits Gleitmittel und Bindemittel beim Verpressen der Pulver zugesetzt werden, die den Nachteil der nicht ausreichenden Pressfestigkeit der Presskörper ausgleichen sollen und andererseits feinteiligere Agglomerate von Primärteilchen eingesetzt werden, die eine geringere Bruchneigung, allerdings zu Lastet der Porenstruktur aufweisen.

Aufgabe der vorliegenden Erfindung ist es, die durch die Sprödigkeit von Niobsuboxid bedingten Nachteile bei der Kondensatorherstellung zu vermeiden.

Dem gemäß ist es Aufgabe der Erfmdung, die Fließfähigkeit der Pulver bei der Herstellung von Niobsuboxidanoden zu verbessern.

Weiterhin ist es Aufgabe der Erfmdung, ein Pulver für die Herstellung von Kondensatoranoden auf Basis Niobsuboxid zur Verfügung zu stellen, das sich zu Presskörpem mit hoher Pressfestigkeit verpressen lässt.

Aufgabe der Erfindung ist es auch, ein Pulver für die Herstellung von Kondensatoranoden auf Basis Niobsuboxid zur Verfügung zu stellen, das bei vergleichsweise niedriger Sintertemperatur gesintert werden kann.

Ferner ist es Aufgabe der Erfindung, Anoden für Kondensatoren auf Basis Niobsuboxid mit erhöhter Pressfestigkeit des Sinterkörpers zur Verfügung zu stellen.

Nicht zuletzt ist es weiterhin Aufgabe der Erfindung, die Anzahl der erforderlichen Herstellungsschritte von Kondensatoren auf Basis Niobsuboxid zu reduzieren und dadurch einerseits zur Kostenreduktion beizutragen und andererseits das Risiko der Kontamination mit für die Kondensatoreigenschaften, insbesondere in Bezug auf den Reststrom, schädlichen Verunreinigungen zu reduzieren.

Es wurde gefunden, dass diese und weitere Aufgaben dadurch gelöst werden können, dass als Ausgangsmaterial für die Herstellung der Press- und Sinterkörper Pulvermischungen aus Niobsuboxid und Niobmetall und/oder Tantalmetall eingesetzt werden.

Gegenstand der Erfindung ist demgemäss ein Verfahren zur Herstellung von Kondensatoranoden auf Basis Niobsuboxid durch Pressen von geeigneten pulverförmigen Ausgangsmaterialien zu Grünkörpern und Sintern der Grünkörper zu porösen Anodenkörpern, das dadurch gekennzeichnet ist, dass als pulverförmiges Ausgangsmaterial eine Pulvermischung aus Niobsuboxidpulver und Niob- und/oder Tantalmetallpulver eingesetzt werden, vorzugsweise Niobmetallpulver.

Sowohl die Niobsuboxidpulver als auch die Niobmetallpulver werden in Form der für die Kondensatorherstellung üblichen Agglomerate von Primärteilchen eingesetzt. Die Primärteilchen weisen die üblichen minimalen linearen Abmessungen von 0,4 bis 2 $\mu$m auf. Die Agglomerate weisen Teilchengrößen mit einem D50-Wert nach Mastersizer (ASTM B 822) von 30 bis 200 $\mu$m, vorzugsweise 120 bis 180 $\mu$m, auf.

Als Niobsuboxidpulver wird vorzugsweise ein Pulver der Formel $NbO_x$ mit x < 2,1, besonders bevorzugt mit 0,7 < x < 2 eingesetzt.

Die Auswahl des Sauerstoffgehaltes des Ausgangsoxides ("x" in der oben genannten Formel) und der relativen Mengen von Niobsuboxid und Niobmetall erfolgt in Abhängigkeit von der gewünschten Verfahrensweise und des gewünschten Produktes (Kondensators). Angestrebt wird, dass in der Trägerstruktur des Kondensators (der Anode) vorhandenes Niobsuboxid die Zusammensetzung $NbO_y$ mit 0,7<y<1,3, vorzugsweise 0,9<y<1,15, insbesondere bevorzugt 1,0<y<1,05 aufweisen soll. Die Anode kann vollständig aus $NbO_y$ bestehen. Die Anode kann aber auch noch geometrische Bereiche aufweisen, die aus Niobmetall oder sehr gering oxidiertem Niobmetall bestehen.

Nach einer ersten Ausführungsform der Erfindung wird ein Niobsuboxidpulver der bevorzugten Zusammensetzung $NbO_y$, mit y wie oben definiert, mit einem Niobmetallpulver intensiv vermischt, und dann in an sich bekannter Weise um einen Niob- oder Tantal-Kontaktdraht in eine Pressform gefüllt, auf eine Pressdichte von 2,3 bis 3,7 g/cm$^3$ gepresst und anschließend im Hochvakuum zu Anoden gesintert.

Die Presskörper weisen einerseits aufgrund der Anwesenheit von sinteraktiverem Niobmetall, andererseits aber auch aufgrund eines Sauerstoffaustausches an den Kontaktstellen von Metall und Oxid ("Reaktionssintern") eine erhöhte Sinteraktivität auf. Erfindungsgemäß sind daher Sintertemperaturen von 1150 bis 1300°C ausreichend, d.h. nach dem erfindungsgemäßen Verfahren können um 150 bis 250°C niedrigere Sintertemperaturen eingesetzt werden.

Niobmetallpulver und Niobsuboxidpulver können in einem beliebigen relativen Mengenverhältnis eingesetzt werden, wobei allerdings bei extremen Mengenverhältnissen der erfindungsgemäße Effekt verschwindet. Bevorzugt ist ein Mengenverhältnis von 0,1 bis 2 (Gewicht), insbesondere bevorzugt 0,1 bis 0,8, und weiter bevorzugt 0,2 bis 0,4.

Die Teilchengrößenverteilung kann (bei angenähert gleicher Primärteilchengröße) vergleichbar gewählt werden. In diesem Falle werden Metallpulver und Suboxidpulver bevorzugt etwa in gleichen Mengenverhältnissen, beispielsweise etwa im Verhältnis 40:60 bis 60:40, eingesetzt.

Bevorzugt ist, dass die Agglomeratteilchengröße der Metallteilchen kleiner ist, als die der Suboxidteilchen. Beispielsweise kann der D50-Wert (nach Mastersizer, ASTM B 822, Benetzungsmittel Daxad 11) der Metallteilchen zwischen 20 und 40 $\mu$m liegen, während der D50-Wert der Suboxidteilchen zwischen 130 und 190 $\mu$m liegen kann. In diesem Falle wird bevorzugt das Metallpulver im Vergleich zum Suboxidpulver in untergeordneten Mengen eingesetzt, vorzugsweise im Verhältnis 9:91 bis 20:80.

Nach einer zweiten Ausführungsform der Erfmdung werden die Suboxid- und Metallpulveragglomerate gegebenenfalls unter vorzugsweise gemeinsamer Mahlung intensiv gemischt und anschließend agglomeriert, so dass sich Agglomeratpulver bilden, die sowohl oxidische- als auch metallische Bereiche enthalten. Die Agglomeration erfolgt vorzugsweise bei Temperaturen zwischen 850 und 1200°C in inerter, vorzugsweise Argon-, Atmosphäre, so dass ein Sauerstoffaustausch zwischen den oxidischen und metallischen Teilchen außer an den unmittelbaren Kontaktstellen durch Festkörperdiffusion unterbleibt.

Bevorzugte und besonders bevorzugte Suboxidpulver werden nach denselben Regeln gewählt, wie bei der ersten Ausführungsform der Erfindung. Insbesondere ist ein Ausgangssuboxid $NbO_x$ mit x geringfügig oberhalb 1 bevorzugt.

Nach der vorzugsweise gemeinsamen Mahlung weisen die Pulver eine bevorzugte Teilchengrößenverteilung auf, die durch einen D50-Wert von 20 bis 50 $\mu$m charakterisiert ist. Der D90-Wert soll vorzugsweise unterhalb von 90 $\mu$m liegen. Nach der Agglomeration, die gegebenenfalls mehrfach wiederholt werden kann, sollen die Pulver eine bevorzugte Teilchengrößenverteilung aufweisen, die durch einen D10-Wert von 50 bis 90 $\mu$m, einen D50-Wert von 150 bis 190 $\mu$m und einen D90-Wert von 250 bis 290 $\mu$m charakterisiert ist.

Es wurde gefunden, dass insbesondere bei mindestens zweifach wiederholter Agglomerationsbehandlung mit zwischengeschalteter Mahlung die wünschenswerte Ausbildung von Sinterbrücken zwischen Suboxid- und Metall-Pulverteilchen bevorzugt wird, da bei der Zwischenmahlung gerade bei dem vorhergehenden Agglomerationsschritt gebildeten Oxid-Oxid-Sinterbrücken bevorzugt aufgebrochen werden.

Die relativen Mengenverhältnisse von Suboxid- und Metallteilchen können bevorzugt nach denselben Kriterien ausgewählt werden wie bei der ersten Ausführungsform der Erfindung.

Bevorzugt ist es, zunächst eine Mischung aus Suboxidpulver und einem Teil des Metallpulvers herzustellen, diese zu agglomerieren, danach einen weiteren Teil des Metallpulvers zuzumischen und zu mahlen und einen weiteren Agglomerationsschritt anzuschließen.

Die Pulver werden anschließend mit einem Niob- oder Tantaldraht zu Anodenkörpern gepresst und gesintert. Die Sinterung kann im Hochvakuum erfolgen, wobei Anodenstrukturen entstehen, die sowohl oxidische als auch metallische Bereiche enthalten.

Nach einer dritten Ausführungsform der Erfindung wird ein Suboxidpulver der Zusammensetzung $NbO_x$ mit 1,3<x<2,1, vorzugsweise 1,8<x<2,1, insbesondere bevorzugt 1,9<x<2, mit einer solchen Menge eines Metallpulvers vermischt, dass eine mittlere Zusammensetzung der Mischung resultiert, die der Formel $NbO_y$ mit 0,7<y<1,3, bevorzugt 0,9<y<1,15, insbesondere bevorzugt 1<y<1,05 entspricht.

Die Pulvermischung wird um einen Kontaktdraht aus Niob oder Tantal in Pressformen gefüllt, auf eine Pressdichte von 2,3 bis 3,7 g/cm$^3$ gepresst und zu Anodenstrukturen gesintert.

Die Sinterung der Anodenpresskörper zum Anodenkörper wird nach dieser dritten Ausführungsform der Erfindung aber in einer wasserstoffhaltigen Atmosphäre so durchgeführt, dass ein Sauerstoffaustausch zwischen den Suboxid- und Metallteilchen auch über die Gasphase (intermediäre Bildung von Wasserdampfmolekülen an den Oxidoberflächen und deren Reduktion an den Metalloberflächen) der Agglomerate stattfindet.

Vorzugsweise wird bei dieser dritten Ausführungsform der Erfindung bei der Sinterung eine Atmosphäre mit einem vergleichsweise niedrigen Wasserstoffpartialdruck eingesetzt, um sicher zu stellen, dass eine Wasserstoffversprödung der metallischen Komponente, insbesondere des Niob-oder Tantaldrahtes, nicht stattfindet. Vorzugsweise erfolgt die Versinterung unter einem Gasdruck von 10 bis 50 mbar absolut. Gegebenenfalls kann eine Nachsinterung im Hochvakuum durchgeführt werden.

Bei der Sinterung mit Sauerstoffausgleich ("Reaktionssintern") vergrößert sich das Volumen der metallischen Ausgangsagglomerate und verkleinert sich das Volumen der oxidischen Ausgangsagglomerate. Bei Einsatz eines Ausgangsoxides der ungefähren Formel $NbO_2$ bleibt das Gesamtvolumen beim Sauerstoffausgleich zum NbO etwa konstant. Konkurrierende Längen- und Volumenänderungen beim Sintern finden also nur im Nahbereich statt und werden durch die durch den Sinterprozess ohnehin bedingten Nahbereichsverschiebungen aufgefangen.

Nach dieser dritten Ausführungsform der Erfindung entstehen Anodenkörper mit einer im wesentlichen homogenen Oxidzusammensetzung der Formel $NbO_y$, mit y wie oben definiert.

Nach einer vierten Ausführungsform der Erfindung werden zunächst wie nach der zweiten Ausführungsform der Erfindung Agglomerate (Tertiärteilchen) erzeugt, die sowohl metallische Primärteilchen und/oder Sekundärteilchen als auch oxidische Primär- und/oder Sekundärteilchen innerhalb eines Teilchenverbundes (Tertiäragglomeratteilchens) aufweisen.

Nach dieser vierten Ausführungsform der Erfindung wird ein Suboxidpulver der Zusammensetzung $NbO_x$ mit 1,3<x<2,1, vorzugsweise 1,8<x<2,1, insbesondere bevorzugt 1,9<x<2, mit einer solchen Menge eines Metallpulvers vermischt, dass eine mittlere Zusammensetzung der Mischung resultiert, die der Formel $NbO_y$ mit 0,7<y<1,3, bevorzugt 0,9<y<1,15, insbesondere bevorzugt 1<y<1,05 entspricht.

Die Sinterung der gepressten Anodenstrukturen erfolgt nach dieser vierten Ausführungsform der Erfindung in derselben Weise wie nach der dritten Ausführungsform der Erfindung, d.h. in Gegenwart von Wasserstoff, so dass eine Anodenstruktur mit einer im wesentlichen homogenen Zusammensetzung entsprechend der Formel $NbO_y$ mit 0,7<y<1,3, bevorzugt 0,9<y<1,15, insbesondere bevorzugt 1<y<1,05 resultiert.

Alle vier Ausführungsformen der Erfindung nutzen die erhöhte Sinteraktivität der Anodenpresskörper durch Reaktionssintern. Dies erlaubt eine erhebliche Reduzierung der Sintertemperatur und/oder der Sinterzeit. Sowohl die Anodenpresskörper als auch die gesinterten Anodenstrukturen weisen eine erhöhte Pressfestigkeit auf. Auch die Verankerung des Anodensinterkörpers mit dem Kontaktdraht ist verbessert. Die Anoden weisen eine erhöhte Drahtabzugsfestigkeit auf.

Die Herstellung der erfindungsgemäß einsetzbaren Suboxidpulver stellt keine besonderen Anforderungen an den Fachmann. Bevorzugt ist das übliche metallurgische Reaktions- und Legierungsverfahren nach dem wie im vorliegenden Fall ein mittlerer Oxidgehalt dadurch hergestellt wird, dass ein hochoxidierter Vorläufer und ein nichtoxidierter Vorläufer in einer nicht oxidierenden, vorzugsweise reduzierenden, Atmosphäre einer Temperatur ausgesetzt werden, in der ein Sauerstoffkonzentrationsausgleich stattfmdet. Andere als dieses Festkörperdiffusionsverfahren sind zwar denkbar, sie setzen aber technisch mit vertretbarem Aufwand kaum lösbare Steuerungs- und Kontrollfunktionen voraus. Erfindungsgemäß bevorzugt ist es daher, ein mit hoher Reinheit kommerziell verfügbares Niobpentoxid einzusetzen und dieses mit hochreinem Niobmetall, beides in Pulverform entsprechend der Stöchiometrie zu vermischen und einer Temperatur von 800 bis 1600°C in einer Argonatmosphäre, die vorzugsweise bis zu 10 Vol-% Wasserstoff enthält, über mehrere Stunden zu behandeln. Vorzugsweise weisen sowohl das Pentoxid als auch das Metall Primärteilchengrößen auf, die nach dem Sauerstoffausgleich der gewünschten Primärteilchengröße von unterhalb oder leicht oberhalb 1 $\mu$m (geringster) Querschnittabmessung entspricht.

Das für den Sauerstoffaustausch mit Niobpentoxid erforderliche Niobmetall wird vorzugsweise durch Reduktion von hochreinem Niobpentoxid zum Metall hergestellt. Dies kann alumino thermisch durch Zünden eines $Nb_2O_5$/Al-Gemisches und Auswaschen des gebildeten Aluminiumoxides und anschließendes Aufreinigen der Niobmetallbarren mittels Elektronenstrahlen erfolgen. Der nach Reduktion und Elektronenstrahlschmelzen erhaltene Niobmetallbarren kann in an sich bekannter Weise mit Wasserstoff versprödet und gemahlen werden, wobei plättchenförmige Pulver erhalten werden.

Das bevorzugte Verfahren zur Herstellung des Niobmetalls folgt der Offenbarung der WO 00/67936 A1. Nach diesem bevorzugten 2-Stufen-Verfahren wird das hochreine Niobpentoxidpulver zunächst mittels Wasserstoff bei 1000 bis 1600°C, vorzugsweise bis 1450°C, zum Niobdioxid etwa der Formel $NbO_2$, reduziert und anschließend mit Magnesiumdampf bei 750 bis 1100°C zum Metall reduziert. Dabei entstehendes Magnesiumoxid wird mittels Säuren ausgewaschen.

Das bevorzugte Verfahren zur Herstellung des Niobsuboxids der Formel $NbO_x$ mit 1,3<x<2,1, vorzugsweise 1,8<x<2,1, insbesondere bevorzugt 1,9<x<2, erfolgt nach der ersten Stufe des in der WO 00/67936 A1 offenbarten Verfahrens, d.h. durch Reduktion des Niobpentoxides mittels Wasserstoff bei 1000 bis 1600°C.

**Beispiele**

Aus einem teilweise agglomerierten feinteiligen, durch ein Sieb der Maschenweite 300 $\mu$m gesiebten Niobpentoxid, das aus sphärischen Primärteilchen mit einem Durchmesser von etwa 0,4 $\mu$m besteht, werden nach dem in WO 00/67936 A1 beschriebenen Verfahren verschiedene Pulver für die nachfolgenden Experimente hergestellt:

Pulver 0: Das Niobpentoxidpulver wird bei 1250°C im Wasserstoffstrom zu $NbO_2$ reduziert.

Pulver A: Das Niobpentoxidpulver wird bei 1480°C im Wasserstoffstrom zu $NbO_2$ reduziert, gemahlen und durch ein Sieb von 300 $\mu$m Maschenweite gerieben.

Pulver B: Das Pulver 0 wird mittels Magnesium-Dampf bei einer Temperatur von 980°C zum Niobmetall reduziert, gemahlen, bei 1150°C im Vakuum agglomeriert, abgekühlt, durch allmählichen Sauerstoffzutritt passiviert und durch ein Sieb von 300 $\mu$m Maschenweite gerieben.

Pulver C: Pulver A und Pulver B werden im molaren Verhältnis 1:1 vermischt, schonend gemahlen und unter einer Atmosphäre aus 80 Vol-% Argon und 20 Vol-% Wasserstoff auf 1400°C erhitzt und durch ein Sieb von 300 $\mu$m Maschenweite gerieben.

Pulver D: Pulver A und Pulver B werden im molaren Verhältnis 1:0,8 gemischt und unter einer Atmosphäre aus 80 Vol-% Argon und 20 Vol-% Wasserstoff auf 1400°C erhitzt und anschließend durch ein Sieb der Maschenweite 300 $\mu$m gerieben.

Pulver E: Pulver A und Pulver B werden im molaren Verhältnis 1:0,7 gemischt und unter einer Atmosphäre aus 80 Vol-% Argon und 20 Vol-% Wasserstoff auf 1400°C erhitzt und anschließend durch ein Sieb der Maschenweite 300 $\mu$m gerieben.

Tabelle 1 gibt die Eigenschaften (Durchschnittswerte) der erhaltenen Pulver wieder.

Aus den Pulvern A, B, C, D und E wurden Mischungen hergestellt, aus denen Anoden hergestellt wurden. Die Bedingungen sind in Tabelle 2 angegeben:

**Tabelle 1:**

| | | Pulver A | Pulver B | Pulver C | Pulver D | Pulver E |
|---|---|---|---|---|---|---|
| | | $NbO_{1,97}$ | Nb | $NbO_{0,98}$ | $NbO_{1,21}$ | $NbO_{1,32}$ |
| Primärteilchengröße[1] | $\mu$m | 0,87 | 0,75 | 0,96 | 1,1 | 1,1 |
| Agglomeratgröße[2] | D10, $\mu$m | 43 | 37 | 58 | 67 | 56 |
| | D50, $\mu$m | 128 | 117 | 145 | 151 | 164 |
| | D90, $\mu$m | 254 | 248 | 272 | 281 | 293 |
| BET-Oberfläche[3] | $m^2$/g | 1,6 | 1,05 | 1,1 | 1,1 | 1,1 |
| Fließfähigkeit[4] | s | 30 | 28 | 59 | 60 | 58 |
| [1] visuell aus REM-Aufnahmen bestimmt. | | | | | | |
| [2] Laserbeugung (Gerät Malvern Mastersizer), ASTM B 822, Benetzungsmittel Daxad 11 | | | | | | |
| [3] ASTM D 3663 | | | | | | |
| [4] nach Hall, ASTM B 213, Fliessdauer für 25g Pulver | | | | | | |

Aus den Pulvern wurden durch Einfüllen in geeignete Presswerkzeuge, in die ein Kontaktdraht aus Tantal eingelegt war, und Pressen auf eine Pressdichte von 2,8 g/cm$^3$ zunächst "Grünkörper" hergestellt, die anschließend frei stehend in einem Ofen bei der angegeben Temperatur entweder bei einem Druck von $10^{-5}$ bar (Vakuum) oder bei Normaldruck in der angegebenen Atmosphäre gesintert wurden.

Für die Bestimmung der Pressfestigkeit der Press- und Sinterkörper wurden zylindrische Presskörper einer Pressdichte von 2,8 g/cm$^3$ der Abmessung 3,6 mm Durchmesser und 3,6 mm Länge mit einem Gewicht von 106 mg ohne eingelegten Kontaktdraht hergestellt und gegebenenfalls versintert.

**Tabelle 2:**

| Beispiel Nr. | Mischungs-Verhältnis der Pulver (Gew.-Teile) A:B:C:D:E | Vorbehandlung der Pulver vor der Herstellung der Presskörper | Sinterbedingungen |
|---|---|---|---|
| 1 (Vgl.) | 0:0:100:0:0 | ./. | Vakuum, 1450°C |
| 2 | 0:10:90:0:0 | Mischen | Vakuum, 1350°C |
| 3 | 0:20:80:0:0 | Mischen | Vakuum, 1300°C |
| 4 | 0:30:70:0:0 | Mischen | Vakuum, 1270°C |
| 5 | 0:40:60:0:0 | Mischen | Vakuum, 1240°C |
| 6 | 0:20:80:0:0 | Mischen, Agglomerieren[5], 1250°C, Argon; Mahlen, Agglomerieren, Sieben[6] | Vakuum, 1350°C |
| 7 | 0:30:70:0:0 | Mischen, Agglomerieren, 1250°C, Argon, Mahlen, Agglomerieren, Sieben | Vakuum, 1270°C |
| 8 | 57:43:0:0:0 | Mischen | 90 Ar+10 $H_2$ 1300°C |
| 9 | 57:43:0:0:0 | Mischen | 90 Ar+10 $H_2$ 1250°C |
| 10 | 57:43:0:0:0 | Mischen | 90 Ar+10 $H_2$ 1200°C |
| 11 | 57:43:0:0:0 | Mischen, Agglomerieren, 1150°C, Argon, Mahlen, Sieben | 90 Ar+10 H2 1260°C |
| 12 | 57:43:0:0:0 | Mischen, Agglomerieren, 1150°C, Argon, Mahlen, Agglomerieren, Sieben | 90 Ar+10 $H_2$ 1260°C |

(fortgesetzt)

| Beispiel Nr. | Mischungs-Verhältnis der Pulver (Gew.-Teile) A:B:C:D:E | Vorbehandlung der Pulver vor der Herstellung der Presskörper | Sinterbedingungen |
|---|---|---|---|
| 13 | 0:20:0:80:0 | Mischen | 95 Ar+5 $H_2$, 1270°C |
| 14 | 0:30:0:0:70 | Mischen | 95 Ar+5 $H_2$, 1245°C |
| 5) "Agglomerieren" bedeutet, dass die Pulver bei der angegebenen Temperatur in der angegebenen Atmosphäre zur Ausbildung von Sinterbrücken über einen Zeitraum von 20 Minuten erhitzt wurden. | | | |
| 6) Reiben durch ein Sieb der Maschenweite 300 μm. | | | |

**Tabelle 3:**

| Bsp. Nr. | Pulvereigenschaften nach Vorbehandlung | | Anoden-/Kondensatoreigenschaften | | |
|---|---|---|---|---|---|
| | Fließfähigkeits | Pressfestigkeit des Grünkörpers[7] kg | Pressfestigkeit des Sinterkörpers[8] kg | Drahtabzugs-Festigkeit[9] kg | spez. Kapazität μFV/g |
| 1 (Vgl.) | 59 | 0,5 | 5,2 | 1,5 | 77.131 |
| 2 | 49 | 1,5 | 10,8 | 2,4 | 75.837 |
| 3 | 41 | 2,1 | 13,7 | 2,8 | 77.792 |
| 4 | 35 | 2,5 | 15,1 | 3,1 | 76.232 |
| 5 | 30 | 2,8 | 16,4 | 3,3 | 74.566 |
| 6 | 40 | 2,3 | 15,1 | 3,0 | 77.924 |
| 7 | 37 | 2,7 | 16,9 | 2,9 | 78.411 |
| 8 | 37 | 2,5 | 17,3 | 3,0 | 68.442 |
| 9 | 37 | 2,5 | 17,3 | 3,0 | 73.978 |
| 10 | 37 | 2,5 | 17,3 | 3,0 | 78.112 |
| 11 | 41 | 2,4 | 18,9 | 2,7 | 75.336 |
| 12 | 40 | 2,8 | 19,1 | 2,9 | 73.592 |
| 13 | 42 | 2,0 | 12,9 | 2,6 | 78.618 |
| 14 | 37 | 2,3 | 14,7 | 2,8 | 79.915 |

7) der Presskörper ohne Kontaktdraht wurde zwischen den Backen eines Druckkraftmessgerätes eingespannt und die Backen zusammengedrückt bis der Presskörper zerbröselte.

8) Wie unter 7), jedoch nach dem Sintern gemessen.

9) Der Anodenkörper wurde in einer Schraubklammer am Umfangsmantel eingespannt, der Kontaktdraht mit einer Zugvorrichtung verbunden und bis zum Abriss auf Zug beansprucht.

Für die Bestimmung der Kondensatoreigenschaften und der Drahtabzugsfestigkeit wurden zylindrische Anodenkörper mit axial zentral eingelegtem Tantaldraht von 3,6 mm Durchmesser und 3,6 mm Länge mit einer Pulvereinwaage von 103 mg hergestellt.

Die Anodenstrukturen wurden anschließend in 0,1 gew.-%iger Phosphorsäure bis zu einer Formierspannung von 30 V bei einer auf 150 mA/g begrenzten Stromstärke formiert, wobei die Spannung, nachdem die Stromstärke auf 0 abgesunken war, noch über 2 h gehalten wurde. Für die Messung der spezifischen Kapazität wurde als Kathode eine 18 gew.-%ige Schwefelsäurelösung eingesetzt, bei einer Bias-Spannung von 10 V und einer Wechselspannung mit einer Frequenz von 120 Hz gemessen.

Obwohl die oben genannten Beispiele hinsichtlich der Auswahl der Verfahrensparameter noch nicht als optimiert gelten können, scheinen die Vorteile offensichtlich und viel versprechend, auch wenn die spezifischen Restströme teilweise (bei hoher statistischer Streuung) 2 nA/μFV erreichen und im Mittel bei etwa 1 nA/μFV lagen. Erste Versuche

lassen vermuten, dass die positiven Effekte bei feinteiligeren Pulvern, d.h. Pulvern, die für Kondensatoren mit höherer Kapazität, z.B. oberhalb von 120.000 $\mu$FV/g, geeignet sind, noch stärker zum Tragen kommen.

**Patentansprüche**

1. Verfahren zur Herstellung von Kondensatoranoden auf Basis Niobsuboxid durch Pressen von Niobsuboxidteilchen zu Grünkörpern und Sintern der Grünkörper zu porösen Anodenkörpern, **dadurch gekennzeichnet, dass** das Niobsuboxidpulver vor dem Pressen mit Niob- und/oder Tantalmetallpulver als Press- und Sinterhilfsmittel versetzt wird.

2. Verfahren nach Anspruch 1, **dadurch gekennzeichnet, dass** das Sinterhilfstnittel und Niobsuboxidpulver in einem Ciewichtsverhältnis von 0,1 bis 2 eingesetzt werden.

3. Verfahren nach Anspruch 1 oder 2, **dadurch gekennzeichnet, dass** das Sinterhilfsmittel und das Niobsuboxidpulver vor dem Sintern vermischt und miteinander agglomeriert werden.

4. Verfahren nach einem der Ansprüche 1 bis 3, **dadurch gekennzeichnet, dass** ein Niobsuboxidpulver der Formel $NbO_x$ mit 0,7<x<1,3, vorzugsweise 0,9<x<1,15, eingesetzt wird.

5. Herfahren nach einem der Ansprüche 1 bis 4, **dadurch gekennzeichnet, dass** ein Niobsuboxidpulver der Formel $NbO_x$ mit 1,3<x<2,1, vorzugsweise 1,8<x<2,1, eingesetzt wird und das Sintern in Gegenwart von Wasserstoff erfolg.

6. Verfahren nach Anspruch 5, **dadurch gekennzeichnet, dass** die gemittelte Zusammensetzung von Niobsuboxiden und Sinterftilfstnittel der Formel $NbO_y$, mit 0,7 < y < 1,3, vorzugsweise 0,9 < y < 1,15, entspricht.

7. Pulvermischung enthaltend Niobsuboxidund ein Sinterhilfsmittel erhältlich nach einem der Ansprüche 1 bis 6.

8. Pulver für die Herstellung von Anodenstrukturen für Festelektrolytkondensatorcn bestehend aus Tertiäragglomeratteilchen, wobei die Tertiärteilchen Agglomerate von Primär- und/oder Sekundärteilchen aus Niobsuboxid und Primär- und/oder Sekundärteilchen aus Niobmetall sind.

9. Pulvermischung oder Pulveragglomerate mit einer mittleren Zusammensetzung der Formel $NbO_x$ mit 0,7<x<1.3 enthaltend Niob- und/oder Tantalmetallpulver, wobei die Pulvermischung oder Pulveragglomerate nach Verpressen auf eine Pressdichte von 2,8 g/cm$^3$ eine Pressfestigkeit von oberhalb 2 kg, vorzugsweise oberhalb von 2,4 kg, aufweisen.

10. Presskörper bestehend aus einer auf eine Dichte von 2,3 bis 3,7 g/cm$^3$ verpressten Pulvermischung nach Anspruch 7 oder eines auf eine Dichte von 2,3 bis 3,7 g/cm$^3$ verpressten Pulvers nach Anspruch 8 oder 9.

11. Festelcktrolytkondensatoranode bestehend aus einer schwammartigen Sinterstruktur, wobei die Sinterstruktur Bereiche aufweist, die aus Niobmetall bestehen, und Bereiche aufweist, die aus Niobsuboxid der Formel $NbO_x$ mit 0,7<x<1,3, vorzugsweise 0,9<x<1,15, bestehen.

12. Festelektrolytkondensatoranode mit einer mittleren Zusammensetzung der Formel $NbO_x$ mit 0,7<a<1,3 mit einer Drahtabzugsfestigkeit von oberhalb 2,0 kg, vorzugsweise von oberhalb 2,5 kg, insbesondere bevorzugt von 2,8 bis 3.5 kg, **erhältlich nach dem Verfahren gemäß einem der Ansprüche 1 bis 6.**

13. Festelektrolytkondensatoranode mit eine mittleren Zusammensetzung der Formel $NbO_x$ mit 0,7<x<1,3 mit einer Pressfestigkeit von oberhalb 10 kg, vorzugsweise von oberhalb 14 kg, insbesondere bevorzugt von mindestens 16 kg, **erhältlich nach dem Verfahren gemäß einem der Ansprüche 1 bis 6.**

14. Frstelektrolytkondcnsator enthaltend eine Anode nach einem der Ansprüche 10 bis 13.

**Claims**

1. Process for producing capacitor anodes based on niobium suboxide by pressing niobium suboxide particles to form powder preforms and sintering the powder preforms to form porous anode bodies, **characterized in that** the niobium suboxide powder is mixed with niobium and/or tantalum metal powder as pressing and sintering aid prior to being pressed.

2. Process according to Claim 1, **characterized in that** the sintering aid and the niobium suboxide powder are used in a weight ratio from 0.1 to 2.

3. Process according to Claim 1 or 2, **characterized in that** the sintering aid and the niobium suboxide powder are mixed and agglomerated together prior to being sintered.

4. Process according to any of Claims 1 to 3, **characterized in that** a niobium suboxide powder of formula $NbO_x$ where $0.7 < x < 1.3$, preferably $0.9 < x < 1.15$, is used.

5. Process according to any of Claims 1 to 4, **characterized in that** a niobium suboxide power of formula $NbO_x$ where $1.3 < x < 2.1$, preferably $1.8 < x < 2.1$, is used and the sintering is carried out in the presence of hydrogen.

6. Process according to Claim 5, **characterized in that** the mean composition of niobium suboxides and sintering aid corresponds to the formula $NbO_y$ where $0.7 < y < 1.3$, preferably $0.9 < y < 1.15$.

7. Powder mixture containing niobium suboxide and a sintering aid obtainable as described in any of Claims 1 to 6.

8. Powder for the production of anode structures for solid electrolyte capacitors, consisting of tertiary agglomerate particles, the tertiary particles being agglomerates of primary and/or secondary particles of niobium suboxide and primary and/or secondary particles of niobium metal.

9. Powder mixture or powder agglomerates with a mean composition of formula $NbO_x$ where $0.7 < x < 1.3$, containing niobium and/or tantalum metal powder, the powder mixture or powder agglomerates after pressing to a green density of 2.8 g/cm$^3$ having a compressive strength of over 2 kg, preferably over 2.4 kg.

10. Pressed body consisting of a powder mixture according to Claim 7 that has been pressed to a density of from 2.3 to 3.7 g/cm$^3$ or of a powder according to Claim 8 or 9 that has been pressed to a density of from 2.3 to 3.7 g/cm$^3$.

11. Solid electrolyte capacitor anode comprising a sponge-like sintered structure, the sintered structure having regions which consist of niobium metal and having regions which consist of niobium suboxide of formula $NbO_x$ where $0.7 < x < 1.3$, preferably $0.9 < x < 1.15$.

12. Solid electrolyte capacitor anode having a mean composition of formula $NbO_x$ where $0.7 < x < 1.3$, with a wire detachment strength under tension of over 2.0 kg, preferably of over 2.5 kg, particularly preferably of from 2.8 to 3.5 kg, obtainable by the process according to any of Claims 1 to 6.

13. Solid electrolyte capacitor anode having a mean composition of formula $NbO_x$ where $0.7 < x < 1.3$, with a compressive strength of over 10 kg, preferably of over 14 kg, particularly preferably of at least 16 kg, obtainable by the process according to any of Claims 1 to 6.

14. Solid electrolyte capacitor including an anode according to any of Claims 10 to 13.

**Revendications**

1. Procédé de fabrication d'anodes de condensateur à base d'un sous-oxyde de niobium par compression de particules de sous-oxyde de niobium en corps crus et frittage des corps crus en corps anodiques poreux, **caractérisé en ce que** la poudre de sous-oxyde de niobium est mélangée avant la compression avec une poudre de métal de niobium et/ou de tantale en tant qu'adjuvant de compression et de frittage.

2. Procédé selon la revendication 1, **caractérisé en ce que** l'adjuvant de frittage et la poudre de sous-oxyde de niobium sont utilisées en un rapport en poids de 0,1 à 2.

3. Procédé selon la revendication 1 ou 2, **caractérisé en ce que** l'adjuvant de frittage et la poudre de sous-oxyde de niobium sont mélangées et agglomérées l'une avec l'autre avant le frittage.

4. Procédé selon l'une quelconque des revendications 1 à 3, **caractérisé en ce qu'**une poudre de sous-oxyde de niobium de formule $NbO_x$, avec $0,7 < x < 1,3$, de préférence $0,9 < x < 1,15$, est utilisée.

5. Procédé selon l'une quelconque des revendications 1 à 4, **caractérisé en ce qu'**une poudre de sous-oxyde de niobium de formule $NbO_x$ avec $1,3 < x < 2,1$, de préférence $1,8 < x < 2,1$, est utilisée et le frittage a lieu en présence d'hydrogène.

6. Procédé selon la revendication 5, **caractérisé en ce que** la composition moyennée de sous-oxydes de niobium et d'adjuvant de frittage correspond à la formule $NbO_y$ avec $0,7 < y < 1,3$, de préférence $0,9 < y < 1,15$.

7. Mélange de poudre contenant un sous-oxyde de niobium et un adjuvant de frittage, pouvant être obtenu selon l'une quelconque des revendications 1 à 6.

8. Poudre pour la fabrication de structures anodiques pour condensateurs à électrolyte solide, constituée de particules agglomérées tertiaires, les particules tertiaires étant des agglomérats de particules primaires et/ou secondaires de sous-oxyde de niobium et de particules primaires et/ou secondaires de métal niobium.

9. Mélange de poudre ou agglomérats de poudre ayant une composition moyenne de formule $NbO_x$ avec $0,7 < x < 1,3$, contenant une poudre de métal niobium et/ou tantale, le mélange de poudre ou les agglomérats de poudre présentant, après compression à une densité comprimée de $2,8$ $g/cm^3$, une résistance à la compression supérieure à $2$ kg, de préférence supérieure à $2,4$ kg.

10. Corps comprimé constitué d'un mélange de poudre comprimé à une densité de $2,3$ à $3,7$ $g/cm^3$ selon la revendication 7 ou d'une poudre comprimée à une densité de $2,3$ à $3,7$ $g/cm^3$ selon la revendication 8 ou 9.

11. Anode de condensateur à électrolyte solide constitué d'une structure frittée de type éponge, la structure frittée comprenant des zones constituées de métal niobium et des zones constituées de sous-oxyde de niobium de formule $NbO_x$ avec $0,7 < x < 1,3$, de préférence $0,9 < x < 1,15$.

12. Anode de condensateur à électrolyte solide ayant une composition moyenne de formule $NbO_x$ avec $0,7 < x < 1,3$, ayant une force d'arrachage d'un fil supérieure à $2,0$ kg, de préférence supérieure à $2,5$ kg, de manière particulièrement préférée de $2,8$ à $3,5$ kg, pouvant être obtenue par le procédé selon l'une quelconque des revendications 1 à 6.

13. Anode de condensateur à électrolyte solide ayant une composition moyenne de formule $NbO_x$ avec $0,7 < x < 1,3$, ayant une résistance à la compression supérieure à $10$ kg, de préférence supérieure à $14$ kg, de manière particulièrement préférée d'au moins $16$ kg, pouvant être obtenue par le procédé selon l'une quelconque des revendications 1 à 6.

14. Condensateur à électrolyte solide contenant une anode selon l'une quelconque des revendications 10 à 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020114722 A
- WO 0171738 A2
- WO 0067936 A1